# EUROPEAN PATENT APPLICATION

(11) **EP 4 295 950 A1**
(43) Date of publication of application: **27.12.2023**
(21) Application number: 21926057.7
(22) Date of filing: 30.11.2021
(51) Int. Cl.: B01L 9/06, B29C 45/00, G01N 35/02

(54) **CONTAINER HOLDER, ANALYSIS DEVICE, AND METHOD FOR MANUFACTURING CONTAINER HOLDER**

(30) Priority: 19.02.2021 JP 2021024854
(71) Applicant: HITACHI HIGH-TECH CORPORATION, Tokyo 105-6409 (JP)
(72) Inventor: SUZUKI, Hiroshi, Tokyo 105-6409 (JP); MIYAKAWA, Takushi, Tokyo 105-6409 (JP); MIYAKE, Masafumi, Tokyo 105-6409 (JP)
(74) Representative: Strehl Schübel-Hopf & Partner
(86) International application number: PCT/JP2021/043939
(87) International publication number: WO 2022/176309

(57) **Abstract**

The purpose of the present invention is to provide a container holder with which it is possible to hold a container in a non-tilted manner and which has a draft angle for smoothly extracting a die used when manufacturing the container holder through injection-molding. A hole in which the container holder according to the present invention accommodates a container has a first wall section and a second wall section, the first wall section having a shape such that the hole widens from an opening section toward a bottom section, and the second wall section having a shape such that the hole widens from the bottom section toward the opening section

## Description

### Technical Field

The present invention relates to a container holder which holds a columnar container.

### Background Aft

An analyzer for analyzing a liquid sample typically includes a container holder for holding a container which stores a sample. In most cases, the container has a long columnar shape like a test tube. The container holder normally holds the container to have its opening portion directed upward. Each of Patent Literatures 1 and 2 discloses the test tube stand as the member for holding the test tube in the above-described manner.

### Citation List

### Patent Literature

Patent Literature 1: Japanese Unexamined Utility Model Application Publication No. sho53-147889
Patent Literature 2: Japanese Unexamined Utility Model Application Publication No. sho53-150280

### Summary of Invention

### Technical Problem

There are cases where the analyzer includes a cover (may be called a table cover having a horizontal top surface) for covering an exterior part of the analyzer. The table cover is typically produced by an injection molding using a resin material. If the container holder is allowed to be placed at an appropriate position on the table cover, a degree of freedom for designing the container holder can be improved. There is a possibility that useful effects such as improved work efficiency can be obtained. A consideration is made with respect to the use of the generally employed test tube stand as disclosed in Patent Literatures 1 and 2 on the table cover for the analyzer.

In the case of the test tube stand as disclosed in Patent Literature 1, multiple mesh-like opening portions formed by the metal wire are provided in the flat surface, and the side wall of the test tube is supported with two metal wires, that is, an upper metal wire and a lower metal wire. In the structure as above, two members (for example, mesh-like metal wire, and two metal wires, that is, the upper and lower metal wires) are fixed by welding or the like. Compared with the table cover, it is difficult to constitute the structure by a single component using the resin material.

Patent Literature 2 discloses the test tube stand constituted by a single component using a resin material. The resin material is molded by an injection molding. In the injection molding process, the finished product and the mold are generally designed to slightly incline the side wall of the finished product (the inclination in the injection molding is called a draft) with respect to a pullout direction to prevent the mold from being worn when it is pulled out from the material. The draft inclines the side wall of the hole through which the test tube is inserted correspondingly. In this state, the test tube inserted and held in the test tube stand is inclined along the draft. When the dispensing probe of the analyzer descends to the inclinedly held test tube, the nozzle may be brought into contact with the wall surface of the test tube, resulting in various failures.

Having been made in light of the problems as described above, it is an object of the present invention to provide a container holder which has the draft that allows smooth pullout of the mold for manufacturing the container holder by the injection molding, and holding of the container in an uninclined state.

### Solution to Problem

The hole portion of the container holder of the present invention for housing the container includes a first wall and a second wall. The first wall has a shape to expand the hole portion from the opening portion toward the bottom portion. The second wall has a shape to expand the hole portion from the bottom portion toward the opening portion.

### Advantageous Effect of Invention

The container holder according to the present invention can be manufactured by the single component using the injection molding. The container holder has the draft for smoothly pulling out the mold, and allows the container to be held in the uninclined state.

### Brief Description of Drawings

Fig. 1 is a top view of an automatic analyzer 1 according to Embodiment 1.
Fig. 2 is a cross-sectional side view illustrating an exemplary configuration in a case where a container holder is manufactured by an injection molding according to a conventional method.
Fig. 3 is a structural drawing of a container holder 100 according to Embodiment 1.
Fig. 4 is a drawing illustrating a state where the container holder 100 holds a sample container 15.
Fig. 5 is a drawing illustrating a shape of a fixed side mold used in manufacturing the container holder 100 by the injection molding.
Fig. 6 is a drawing illustrating a shape of a movable side mold used in manufacturing the container holder 100 by the injection molding.
Fig. 7 is a cross-sectional side view illustrating a process of manufacturing the container holder 100 by the injection molding.
Fig. 8 is a perspective view of a container holder 100 according to Embodiment 2.
Fig. 9 is a schematic diagram illustrating a top surface shape of the container holder 100 according to Embodiment 2.
Fig. 10 is a drawing illustrating an exemplary shape of the sample container 15.
Fig. 11 is a perspective view of a container holder 100 according to Embodiment 3.
Fig. 12 is a schematic diagram illustrating a top surface shape of the container holder 100 according to Embodiment 3.
Fig. 13 is a schematic diagram illustrating a top surface shape of a container holder 100 according to Embodiment 4.
Fig. 14 illustrates an exemplary shape of a container holder 100 according to Embodiment 5.
Fig. 15 illustrates another exemplary shape of the container holder 100 according to Embodiment 5.

### Description of Embodiments

### [Embodiment 1]

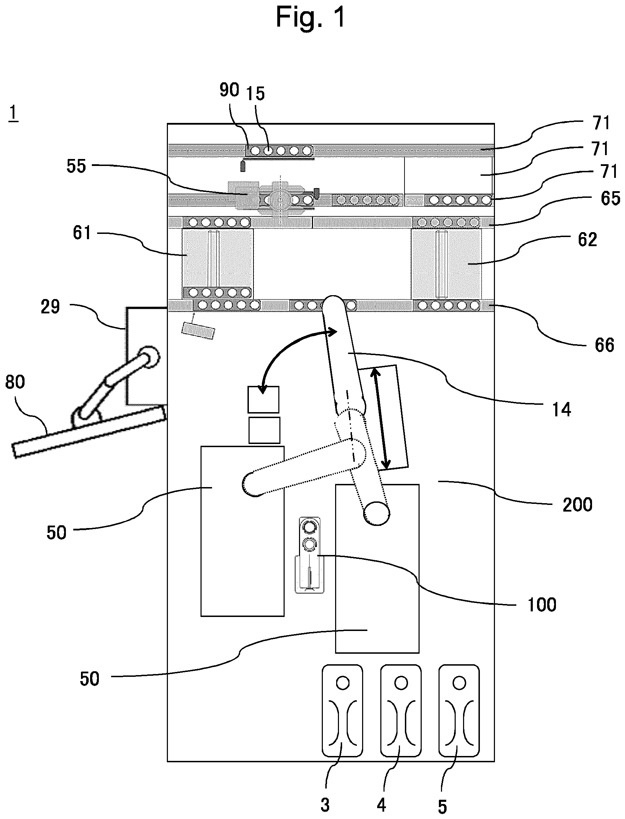

Fig. 1 is a top view of an automatic analyzer 1 according to Embodiment 1 of the present invention. The automatic analyzer 1 is an apparatus for analyzing a liquid sample such as blood. The automatic analyzer 1 includes a transport line 71, a gripper 55, dispensing lines 65, 66, a pre-analysis buffer 61, a post-analysis buffer 62, two analysis chambers 50, a sample probe 14, a display device 80, a control device 29, and the like.

The control device 29 controls the respective sections of the automatic analyzer 1. The display device 80 displays analysis results derived from the automatic analyzer 1.

The transport line 71 disposed at an end part of the analyzer transports a transport container 90 which mounts multiple sample containers 15 each storing the sample, which have been loaded from a sample rack loading unit (not shown) to a transfer position by the gripper 55, and unloads the transport container 90 for the measurement which has been done.

In this embodiment, multiple sample containers 15 are mounted on the transport container 90 in an exemplary case. However, the transport container 90 may be configured to accommodate one sample container 15 or more. A sample holder as another example of the transport container 90 can accommodate one sample container 15.

The gripper 55 is a mechanism for transferring the transport container 90 from the transport line 71 to the dispensing lines 65, 66, or from the dispensing lines 65, 66 to the transport line 71.

The dispensing lines 65, 66 are mechanisms for transporting the sample containers 15 for dispensation in the transport container 90 to a position of dispensation to be performed by the sample probe 14, or transporting the transport container 90 having the sample containers 15 after dispensation to the post-analysis buffer 62.

The pre-analysis buffer 61 and the post-analysis buffer 62 are spaces where the sample containers 15 are kept standby until they are transported to another position, for example, those waiting for transport to the analysis chamber 50 for dispensation, and those for the analysis which has been done.

Two analysis chambers 50 constitute an analysis section, each of which includes an ISE electrode for measuring concentration of an electrolyte of the sample. The sample probe 14 for dispensing the sample to the analysis chambers 50 is sharedly used thereby. The number of the analysis chambers 50 may be two or more, or three or more.

Three types of reagents are used for performing the measurement, that is, an internal standard fluid, a dilute solution, and a comparison electrode liquid. An internal standard fluid bottle 3 stores the internal standard fluid, a dilute solution bottle 4 stores the dilute solution, and a comparison electrode liquid bottle 5 stores the comparison electrode liquid.

The table cover 200 is a cover for covering an exterior of the analyzer for shielding the inside thereof. The table cover 200 is typically produced by the injection molding using a resin. A container holder 100 is a member for holding the sample container 15. The sample container 15 is a test tube type container.

### [Embodiment 1: Mount Position of Container Holder]

A task that involves degree of freedom for a mount position of the container holder 100 will be described with respect to an operation workload when maintaining the automatic analyzer 1 as an exemplary case. At a time of maintenance, the reagent may be used. The sample probe 14 is designed to be operated within a range which allows an access to the place to which the sample rack moves. Normally, the sample probe 14 dispenses the reagent during the maintenance by following the conventional maintenance procedure of loading the transport container 90 mounted with the sample container 15 from the sample rack loading unit, and transporting the container by the transport line 71 similarly to the case of measurement. The procedure, however, requires an operator to prepare the sample rack for each maintenance operation, imposing a heavy burden on the operator. If the operator is allowed to place the container holder 100 at an arbitrary position on the table cover 200, for example, the sample container 15 can be held at an arbitrary position in the range which allows an access of the sample probe 14. The operator is no longer required to prepare the sample rack mounted with the sample container 15. The maintenance work efficiency can be improved.

Embodiment 1 is designed to manufacture the container holder 100 as a part of the table cover 200 so that the sample probe 14 is allowed to dispense the reagent from the container holder 100 on the table cover 200. The resultant maintenance efficiency is expected to be improved. When the table cover 200 and the container holder 100 are integrally manufactured by the injection molding, the problem occurs as described below.

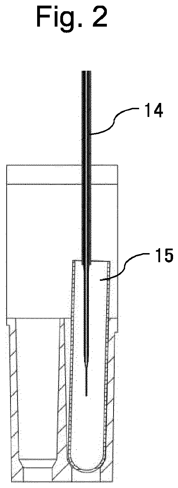

Fig. 2 is a cross-sectional side view illustrating an exemplary configuration in a case where the container holder is manufactured by the injection molding according to a conventional method. The injection molding is a process for manufacturing a part by pouring a material such as a resin to the space defined by closing a fixed side mold and a movable side mold, and pulling out the molds from the material in a solidified state. In the injection molding, when pulling out the molds from the material, normally, the shape of the molded product is slightly inclined to a pullout direction to prevent wear of the molds. The inclination in the process is called a draft. Referring to Fig. 2, the draft is formed to expand the hole portion from the bottom surface to the opening portion of the container holder.

In the case where the hole portion of the container holder has the draft as illustrated in Fig. 2, the sample container 15 held by the container holder leans on an inner wall of the hole portion as indicated by the right side of Fig. 2. As a result, the sample container 15 is held in the inclined state. When the sample probe 14 descends into the sample container 15 in this state, the sample probe 14 may come into contact with the inner wall of the sample container 15, leading to various failures such as damage, adhesion of liquid to the wall surface, and the like.

In Embodiment 1, explanations will be made with respect to a structure of the container holder 100, and a method for manufacturing the container holder. Specifically, the container holder 100 is manufactured by the injection molding so that the sample container 15 can be vertically held.

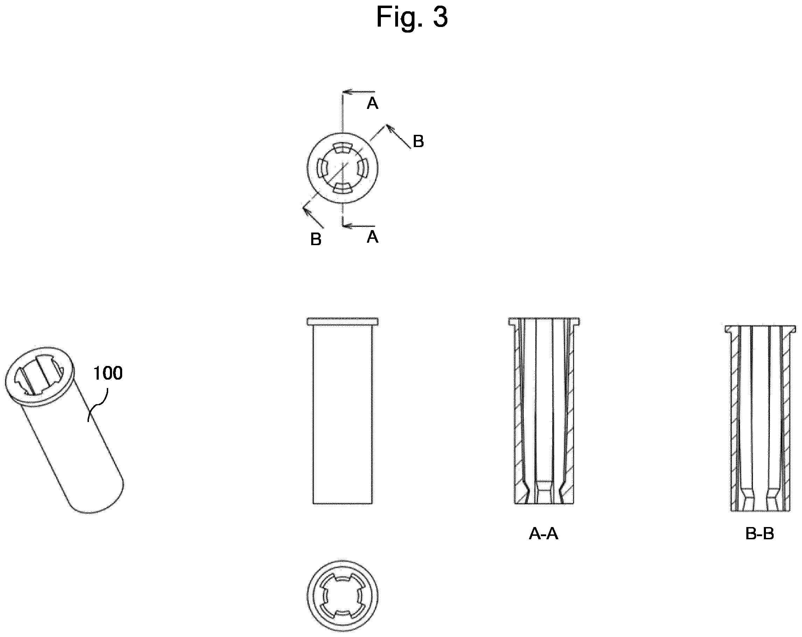

Fig. 3 is a structural drawing of the container holder 100 according to Embodiment 1. The left section of Fig. 3 is a perspective view. An upper stage, a middle stage, and a lower stage of the center section of Fig. 3 represent a top view, a side view, and a bottom view, respectively. The right section of Fig. 3 includes a cross-sectional view taken along line AA, and a cross-sectional view taken along line BB. An angle formed by the lines AA and BB is 45°, for example.

The container holder 100 is a cylindrical member having a hole portion which accommodates an insertion of the sample container 15. An inner wall of the hole portion is not vertically formed along its entire length, but partially inclined to a depth direction (vertical direction in the drawing, the same direction as a direction for inserting and extracting the sample container 15). The inclined part will be described hereinafter.

Referring to the cross-sectional view taken along line AA, a side wall of the hole portion is inclined to gradually expand the hole portion from the bottom portion to the opening portion of the container holder 100. This inclination serves as the draft for pulling out the movable side mold to be described later. Referring further to the cross-sectional view taken along line AA, the bottom portion of the container holder 100 has portions projecting from the side wall to the inside. The projection portions serve to support the sample container 15 from below to prevent the sample container 15 from coming off.

Referring to the cross-sectional view taken along line BB, the side wall of the hole portion is inclined to gradually expand the hole portion from the opening portion to the bottom portion of the container holder 100. This inclination serves as the draft for pulling out the fixed side mold to be described later.

Fig. 3 shows an AA cross section at one position (a longitudinal cross section as shown in the upper stage of the center section of Fig. 3), and a BB cross section at one position. The transverse cross section as shown in the upper stage of the center section of Fig. 3 has a similar shape to the AA cross section. The cross section at a position shifted by 45° from the AA cross section has the similar shape to the BB cross section.

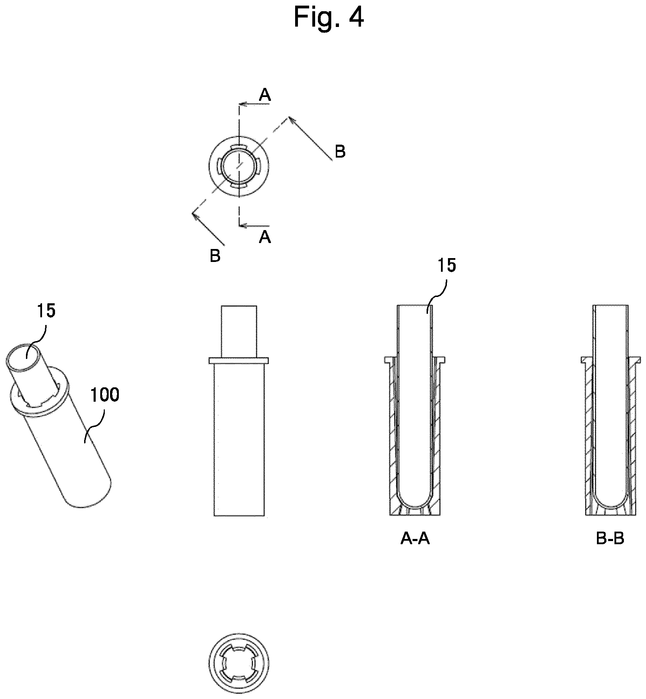

Fig. 4 is a drawing illustrating a state where the container holder 100 holds the sample container 15. Fig. 4 is similar to Fig. 3 except that the sample container 15 is inserted into the hole portion. Referring to the AA cross section, the hole portion becomes thinner toward the bottom portion to reach the lowermost part or a portion therearound where the diameter of the hole portion becomes equal to that of the sample container 15. The container holder 100 supports the sample container 15 at this point. Referring to the BB cross section, the hole portion becomes thinner toward the opening portion to reach the uppermost part or a part therearound where the diameter of the hole portion becomes equal to that of the sample container 15. The container holder 100 supports the sample container 15 at this point.

As Fig. 4 illustrates, the sample container 15 is supported at the upper part and the lower part of the hole portion. Unlike the conventional case, the sample container 15 can be vertically held without being inclined. Accordingly, this makes it possible to avoid the contact of the sample probe 14 with the inner wall of the sample container 15.

### [Embodiment 1 : Procedure of Manufacturing Container Holder 100]

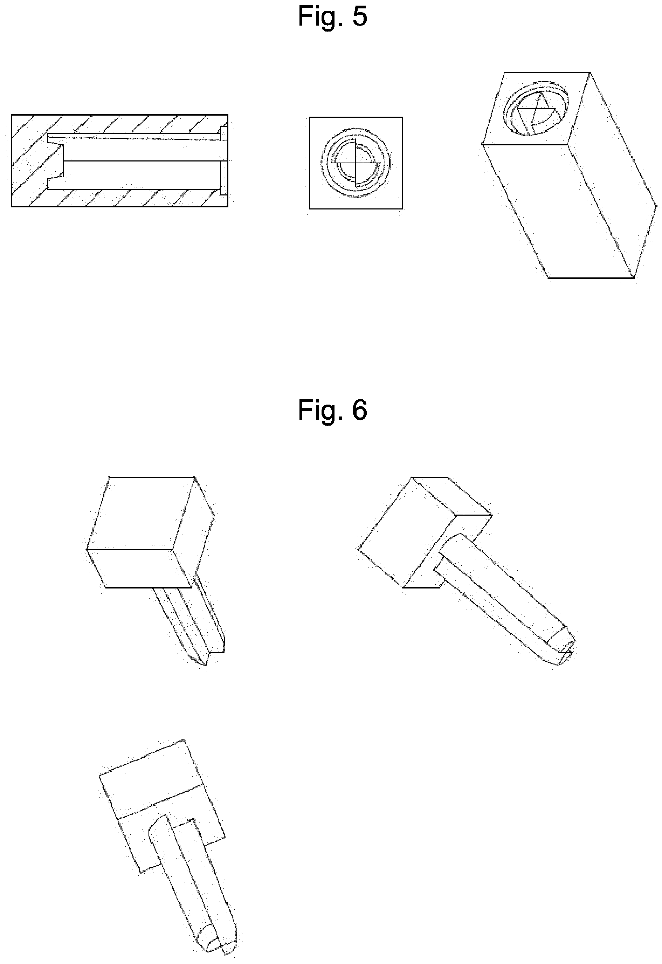

Fig. 5 is a drawing illustrating a shape of the fixed side mold used for manufacturing the container holder 100 by the injection molding. The left, center, and right sections of Fig. 5 represent a cross-sectional side view, a top view, and a perspective view, respectively. The fixed side mold forms the shape of the BB cross section as described referring to Figs. 3 and 4. That is, side walls of two circular-arc-like columns inside the fixed side mold are inclined so that the hole portion of the container holder 100 expands from the opening portion to the bottom portion. Other parts of the inner wall of the fixed side mold may be similarly inclined.

The bottom portion of the fixed side mold includes a section for supporting a bottom surface of the sample container 15. This section is formed so that the inner wall of the container holder 100 projects toward the center when pouring the material for the container holder 100. Like the bottom portion as indicated by the AA cross section in Figs. 3 and 4, the part projecting from the side wall toward the center is formed in the bottom portion of the container holder 100. This part supports the sample container 15 from below.

Fig. 6 is a drawing illustrating a shape of the movable side mold used for manufacturing the container holder 100 by the injection molding. The movable side mold forms the shape of the AA cross section as described referring to Figs. 3 and 4. The two circular-arc-like columns of the movable side mold are inclined so that the hole portion of the container holder 100 expands from the bottom portion to the opening portion.

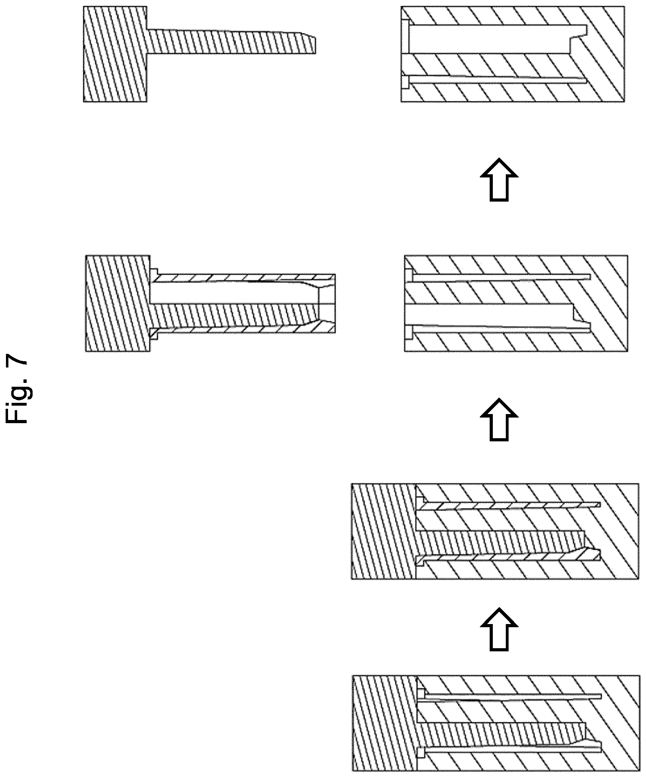

Fig. 7 is a cross-sectional side view illustrating a process of manufacturing the container holder 100 by the injection molding. The fixed side mold as described referring to Fig. 5, and the movable side mold as described referring to Fig. 6 are used in the manufacturing process. The manufacturing process is divided into four steps. The process proceeds the steps from left to right in Fig. 7. The upper member in the first step is the movable side mold, and the lower member is the fixed side mold.

In the first step, the fixed side mold and the movable side mold are closed, and the molds are warmed entirely. In the second step, the resin is poured to a cavity defined by the molds. The resin part is indicated by a downward-sloping hatching in Fig. 7.

In the third step, the fixed side mold is pulled out from the resin material. The two circular-arc-like columns inside the fixed side mold are inclined to expand from the opening portion to the bottom portion of the container holder 100. Referring to the lower stage of Fig. 7, the cavity in the third step represents the inclination. The inclination serves as the draft for pulling out the fixed side mold. As the inclination is formed as the draft for the fixed side mold, even if the movable side mold is moved, the resin material is not separated from the movable side mold. Accordingly, the fixed side mold can be pulled out by moving the movable side mold.

In the fourth step, the movable side mold is pulled out from the resin material. The two circular-arc-like columns of the movable side mold are inclined to expand from the bottom portion to the opening portion of the container holder 100. Referring to the upper stage of Fig. 7, the side surface of the column in the fourth step represents the inclination. The inclination serves as the draft for pulling out the movable side mold.

Execution of the steps allows manufacturing of the container holder 100 as described referring to Figs. 3 and 4 by the injection molding. In the case of manufacturing the table cover 200 by the injection molding, the table cover 200 and the container holder 100 can be integrally molded.

### [Embodiment 1: Summary]

The container holder 100 according to Embodiment 1 has the hole portion through which the sample container 15 is inserted. The inner wall of the hole portion has the first wall which expands the hole portion from the opening portion to the bottom portion, and the second wall which expands the hole portion from the bottom portion to the opening portion. This forms the drafts for the fixed side mold and the movable side mold, respectively. The sample container 15 can be supported with two points at the upper and the lower parts while being kept uninclined.

### [Embodiment 2]

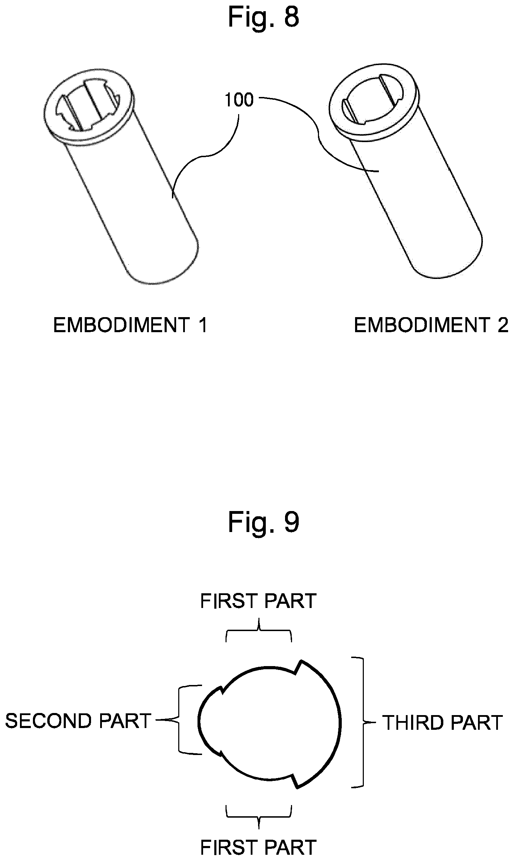

Fig. 8 is a perspective view of the container holder 100 according to Embodiment 2 of the present invention. The container holder 100 according to Embodiment 1 is illustrated in the drawing for comparison of the shape. The container holder according to Embodiment 1 includes two pairs of inner walls (see the AA cross section of Fig. 3) which are inclined to gradually expand the hole portion from the bottom portion to the opening portion, and two pairs of inner walls (see the BB cross section of Fig. 3) which are inclined to expand the hole portion from the opening portion to the bottom portion. As the right section of Fig. 8 illustrates, it is also possible to form each single pair of inner walls shaped as the AA and BB cross sections, respectively. Even in this case, the sample container 15 can be supported with the bottom portion and the top portion of the container holder 100 to provide similar effects to those derived from Embodiment 1. Other structures are the same as those of Embodiment 1.

Fig. 9 is a schematic diagram illustrating a top surface shape of the container holder 100 according to Embodiment 2. A feature part of the shape is illustrated rather emphatically for easy understanding. Although the top surface of the container holder 100 is circular as a whole (first part), two projection parts are formed on the circumference (second and third parts) each projecting outward from the center of the circle. Each of the first, the second, and the third parts has a circular arc shape. The first part supports the sample container 15 at the top part of the BB cross section as illustrated in Fig. 4. The second and the third parts have shapes different from each other. Specifically, a radius of the second part is smaller than that of the third part. A central angle of the second part may be the same as or different from that of the third part. Fig. 9 illustrates an example that the second and the third parts have the same central angles.

The opening portion of the container holder 100 has two projection parts which are constituted by circular arcs each having the different diameter (the second and the third parts) as illustrated in Fig. 9. Even in this case, so long as the container holder 100 has a portion for supporting the sample container 15 on the top part like the BB cross section as illustrated in Fig. 4, the similar effects to those derived from Embodiment 1 can be obtained. The second and the third parts provides effects as described below.

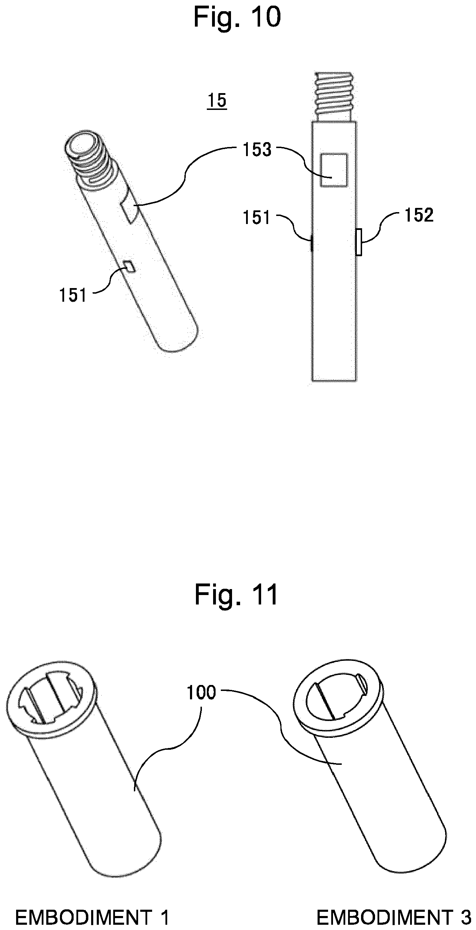

Fig. 10 is a drawing illustrating an exemplary shape of the sample container 15. The left section of Fig. 10 is a perspective view, and the right section of Fig. 10 is a front view. The sample container 15 has protrusions 151 and 152 on the left and right side walls to the front surface in the drawing, respectively. A barcode 153 is provided on the front surface. The protrusion 152 is larger in size than the protrusion 151.

The sample container 15 is required to be inserted into the container holder 100 while directing the barcode 153 in a predetermined direction to allow the barcode reader to read the barcode 153. The protrusion 151 is formed to have its diameter smaller than that of the second part as illustrated in Fig. 9. The protrusion 152 is formed to have its diameter larger than that of the second part, and slightly smaller than that of the third part as illustrated in Fig. 9. The sample container 15 can be inserted only in the direction in which the second part shown in Fig. 9 is fitted with the protrusion 151, and the third part is fitted with the protrusion 152. Accordingly, the direction of the barcode 153 can be easily adjusted.

### [Embodiment 3]

Fig. 11 is a perspective view of the container holder 100 according to Embodiment 3 of the present invention. The container holder according to Embodiment 1 is illustrated in the drawing for comparison of the shape. In Embodiment 3, the opening portion in the top surface of the container holder 100 has a shape different from those described in Embodiments 1 to 2. Other structures are the same as those of Embodiments 1 and 2.

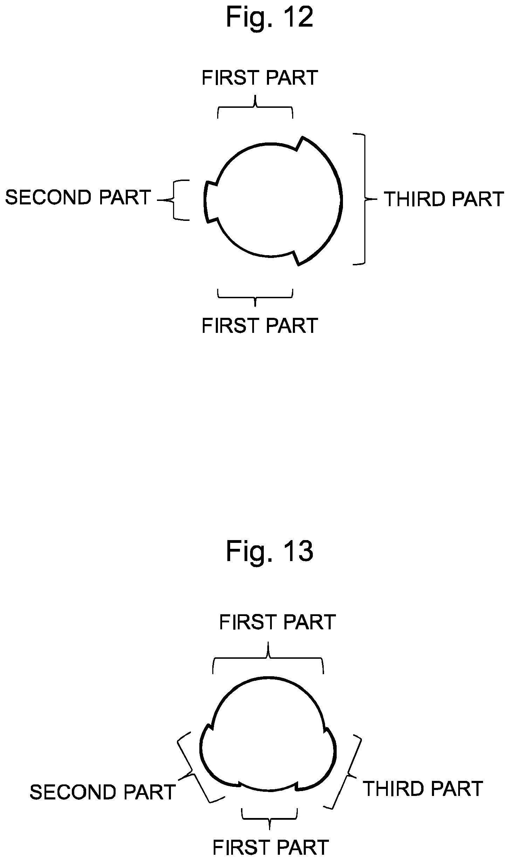

Fig. 12 is a schematic diagram illustrating a top surface shape of the container holder 100 according to Embodiment 3. A feature part of the shape is illustrated rather emphatically for easy understanding. Referring to Fig. 12, the central angle of the second part is smaller than that of the third part. A radius of the second part may be the same as or different from that of the third part. Fig. 12 illustrates an example that each of the second and the third parts has the same radius.

As Fig. 12 illustrates, the opening portion of the container holder 100 has two projection parts which are constituted by circular arcs each having the different central angle (the second and the third parts). Even in this case, so long as the container holder 100 has a portion in the top part for supporting the sample container 15 on the top part like the BB cross section as illustrated in Fig. 4, the similar effects to those derived from Embodiment 1 can be obtained.

In the case where that the container holder 100 according to Embodiment 3 holds the sample container 15 as illustrated in Fig. 10, the protrusion 151 is formed to have its diameter slightly smaller than the second part as illustrated in Fig. 12. The protrusion 152 is formed to have its diameter larger than the second part, and slightly smaller than the third part as illustrated in Fig. 12. This structure also allows the sample container 15 having the protrusions 151, 152 as illustrated in Fig. 10 to be inserted into the container holder 100 only in the specified direction in Embodiments 3.

### [Embodiment 4]

Fig. 13 is a schematic diagram illustrating a top surface shape of the container holder 100 according to Embodiment 4 of the present invention. A feature part of the shape is illustrated rather emphatically for easy understanding. In Embodiment 3, the opening portion in the top surface of the container holder 100 has a shape different from those described in Embodiments 2 and 3. Other structures are the same as those described in Embodiments 1 to 3.

Referring to Fig. 13, the second part and the third part are formed as the circular arcs each having the same central angle and the same radius. The second part has a shape formed by rotating the third part to the center of the opening portion as a rotation center. The second and the third parts do not have to be arranged to face with each other with respect to the center of the opening portion. For example, as Fig. 13 illustrates, those parts are arranged so that the second part is overlaid with the third part that has been rotated by an angle equal to or smaller than 180°.

As Fig. 13 illustrates, the opening portion of the container holder 100 has two projection parts (the second and the third parts) which are constituted by circular arcs which do not face with each other. Even in this case, so long as the container holder 100 has a portion in the top part for supporting the sample container 15 like the BB cross section as illustrated in Fig. 4, the similar effects to those derived from Embodiment 1 can be obtained. The insertion direction of the sample container 15 can be specified by making an angle formed by the protrusions 151 and 152 of the sample container 15 equal to an angle formed by the second part and the third part.

### [Embodiment 5]

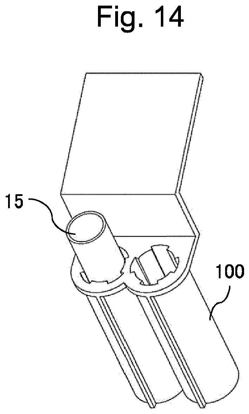

Fig. 14 illustrates an exemplary shape of the container holder 100 according to Embodiment 5 of the present invention. The container holder 100 may be shaped by connecting a cylinder part having a hole portion for accommodating the sample container 15 to a flat plate part as illustrated in Fig. 14. In this case, the flat plate part is placed on, for example, the table cover 200 to allow the container holder 100 to be mounted on an arbitrary position.

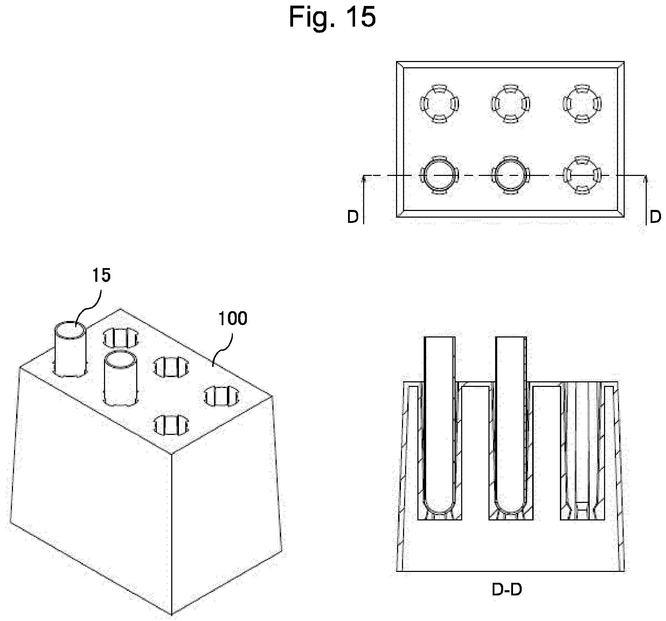

Fig. 15 illustrates another exemplary shape of the container holder 100 according to Embodiment 5 of the present invention. The container holder 100 may be shaped like the test tube stand as illustrated in Fig. 15. The bottom surface of the test tube stand is disposed on the table cover 200 so that the container holder 100 can be placed on an arbitrary position.

### [Modification of Present Invention]

The present invention is not limited to the embodiments as described above, but includes various modifications. For example, the embodiments are described in detail for readily understanding of the present invention which is not necessarily limited to the one equipped with all structures as described above. It is possible to replace a part of the structure of one embodiment with the structure of another embodiment. The structure of one embodiment may be provided with an additional structure of another embodiment. It is further possible to add, remove, and replace the other structure to, from and with a part of the structure of the respective embodiments.

In the embodiments as described above, if multiple hole portions are formed for accommodating an insertion of the sample containers 15 as Figs. 14 and 15 illustrate, each of the opening portions of the respective hole portions needs not have the same shape. The opening portions may be arbitrarily shaped in the respective embodiments.

In the embodiments as described above, the resin material is used for preparing the container holder 100 and the table cover 200 as an exemplary case. Other materials may be used so long as they are available for manufacturing by the injection molding using the fixed side mold and the movable side mold.

In the embodiments as described above, the transport container 90 may be provided with the structure provided for the container holder 100. Specifically, the transport container 90 for holding the sample container 15 may be configured to form the similar hole portions to those of the container holder 100 therein to support the sample container 15 with the upper and the lower parts of the hole portion, and to securely form the draft.

### List of Reference Signs

- 1: automatic analyzer
- 15: sample container
- 151: protrusion
- 152: protrusion
- 153: barcode
- 100: container holder
- 200: table cover

## Claims

1. A container holder that holds a columnar container, comprising
a hole portion that houses the container,
wherein the hole portion includes a bottom portion and an opening portion through which the container is inserted,
the hole portion includes an inner wall that includes a first wall and a second wall, the first wall is inclined with respect to a depth direction of the hole portion by a first angle, and the second wall is inclined with respect to the depth direction by a second angle different from the first angle,
the first wall has a shape that expands the hole portion from the opening portion toward the bottom portion, and
the second wall has a shape that expands the hole portion from the bottom portion toward the opening portion.

2. The container holder according to claim 1,
wherein a part of an outer shape of the opening portion is formed by the first wall, and
a different part from the part of the outer shape is formed by the second wall.

3. The container holder according to claim 2,
wherein the opening portion has a circular shape, and
the part of the circular shape is disposed at a position to which the different part of the circular shape is rotated along a circumferential direction of the circular shape having a center of the circular shape as a rotational center.

4. The container holder according to claim 1,
wherein the outer shape of the opening portion includes:
a first part formed by the first wall;
a second part different from the first part; and
a third part different from the first part and different from the second part, and
the outer shape of the second part is different from the outer shape of the third part.

5. The container holder according to claim 4,
wherein the second part and the third part have shapes in which an outline of the first part is projected outward from a center of the opening portion, and
a size of a part projecting from the outline in the second part is different from a size of a part projecting from the outline in the third part.

6. The container holder according to claim 5,
wherein the first part, the second part, and the third part each include a circular arc, and
the circular arc included in the second part has a radius different from a radius of the circular arc included in the third part.

7. The container holder according to claim 5,
wherein the first part, the second part, and the third part each include a circular arc, and
the circular arc included in the second part has a central angle different from a central angle of the circular arc included in the third part.

8. The container holder according to claim 1,
wherein the outer shape of the opening portion includes:
a first part formed by the first wall;
a second part different from the first part; and
a third part different from the first part and different from the second part, and
the second part has a shape in which the third part is rotated by an angle smaller than 180° having a center of the opening portion as a rotational center.

9. The container holder according to claim 1,
wherein the container holder is formed of a resin.

10. An analyzer that analyzes a component contained in a liquid sample, comprising
the container holder according to claim 1.

11. The analyzer according to claim 10, further comprising
a cover that covers at least a part of an outer surface of the analyzer,
wherein the container holder is formed as a part of the cover.

12. A method for manufacturing a container holder that holds a columnar container, the method comprising:
a step of pouring a material of the container holder into a space formed by closing a fixed side mold and a movable side mold;
a step of solidifying the material;
a step of removing the fixed side mold from the material after solidifying the material; and
a step of removing the movable side mold from the material after the fixed side mold is removed from the material,
wherein the fixed side mold includes a portion for forming a bottom portion of a hole portion in which the container holder houses the container and a portion for forming a first wall of an inner wall of the hole portion,
the movable side mold has a portion for forming an opening portion through which the container is inserted into the hole portion and a portion for forming a second wall of the inner wall,
the first wall is inclined with respect to a depth direction of the hole portion by a first angle,
the second wall is inclined with respect to the depth direction by a second angle different from the first angle,
the first wall has a shape that expands the hole portion from the opening portion toward the bottom portion, and
the second wall has a shape that expands the hole portion from the bottom portion toward the opening portion.

13. The method according to claim 12,
wherein the material is a resin.
